# FASCICULE DE BREVET EUROPEEN

(11) **EP 3 550 687 B1**
(45) Date de publication et mention de la délivrance du brevet: **29.05.2024**
(21) Numéro de dépôt: 19167090.0
(22) Date de dépôt: 03.04.2019
(51) Int. Cl.: H02G 15/184

(54) **ACCESSOIRE POUR CABLE A CONDUCTIVITE THERMIQUE AMELIOREE**
KABELVERBINDUNG MIT VERBESSERTE WÄRMELEITFÄHIGKEIT
CABLE ACCESSORY WITH IMPOVED THERMAL CONDUCTIVITY

(30) Priorité: 05.04.2018 FR 1852973
(43) Date de publication de la demande: 09.10.2019
(73) Titulaire: Nexans, 92400 Courbevoie (FR)
(72) Inventeur: SALAME, Basil, 69003 LYON (FR); CHARMETANT, Adrien, 69003 LYON (FR); LAURENT, Mickaël, 69005 LYON (FR)
(74) Mandataire: Ipsilon

(56) Documents cités:
- BE-A- 831 816
- CN-B- 103 275 357
- FR-A1- 2 894 957
- FR-A1- 3 008 223
- FR-A1- 3 015 104

## Description

L'invention concerne un accessoire pour câble, ledit accessoire étant entouré par au moins une couche réticulée électriquement isolante comprenant au moins un matériau polymère, du nitrure de bore et du carbure de silicium, un dispositif électrique comprenant au moins ledit accessoire pour câble, un procédé de fabrication dudit accessoire et dudit dispositif, l'utilisation de ladite couche réticulée autour d'un accessoire pour câble électrique ou dans un dispositif électrique, notamment pour favoriser l'évacuation de la chaleur, un kit de raccordement de câbles électriques, et un accessoire pour câble, ledit accessoire comprenant deux charges de conductivité thermique différentes.

L'invention s'applique typiquement mais non exclusivement au domaine des câbles d'énergie à haute tension (notamment supérieure à 60kV), et en particulier au domaine des accessoires pour câbles tels que des jonctions de câble, notamment des jonctions de câble haute tension en courant continu ou alternatif (également bien connues sous l'anglicisme « *HVDC joint* » pour « *high voltage direct current joint* » ou « *HVAC joint* » pour « *high voltage alternative current joint* ».

Le problème de surchauffe dans les jonctions de câble est bien connu. Il se traduit par une élévation de la température entre le câble et le point le plus chaud de la jonction dudit câble. Cela peut avoir des conséquences multiples telles que la dégradation des couches polymères sous-jacentes, des risques de claquage et/ou une panne électrique.

De la demande internationale WO2015/053796 A1 est connue une couche de protection thermique inorganique comprenant de 5 à 30% en poids d'un adhésif inorganique tel qu'un silicate de métal, de 2 à 20% en poids d'un ou plusieurs agents d'émissivité tels que du nitrure de bore, et de 45 à 92% en poids d'une charge telle qu'un oxyde de métal. Cette couche peut permettre d'abaisser la température d'un câble ou d'un accessoire pour câble. Toutefois, cette couche de protection thermique est peu flexible, et elle peut s'avérer difficile à installer autour d'un accessoire pour câble, notamment de par la variation des diamètres des différentes sections le long d'un tel accessoire, en particulier lorsqu'il relié à un ou plusieurs câbles. Enfin, la conductivité thermique d'une telle couche n'est pas mesurée. Le document FR3015104A1 concerne un dispositif comprenant un câble et/ou un accessoire pour câble, ledit câble et/ou ledit accessoire pour câble étant entouré par au moins une enveloppe de protection thermique comprenant un matériau inorganique ayant un point de fusion supérieur à 800°C, le matériau inorganique étant un matériau tissé. Le document CN103275357B décrit un matériau composite utilisé dans une couche isolante de câble, le matériau comprenant une poudre composite thermiquement conductrice et un matériau polymère.

Le but de l'invention est donc de pallier les inconvénients de l'art antérieur en proposant un accessoire pour câble entouré par une couche présentant une conductivité thermique améliorée, tout en garantissant de bonnes propriétés mécaniques, notamment en termes de flexibilité, et/ou de bonnes propriétés d'isolation électrique et/ou d'étanchéité, ladite couche pouvant s'adapter à tout type de variation de diamètre des sections le long d'un accessoire.

Un autre but de l'invention est de fournir un procédé simple, économique, facile à mettre en oeuvre, et permettant de conduire à un accessoire pour câble ayant les propriétés susmentionnées.

La présente invention a pour premier objet un ensemble comprenant un accessoire pour câble électrique et au moins une couche réticulée électriquement isolante tel que défini dans la revendication 1.

Grâce à la combinaison du matériau polymère, du nitrure de bore et du carbure de silicium, la couche réticulée présente une conductivité thermique améliorée, induisant une meilleure évacuation de la chaleur générée au sein de l'accessoire. Par ailleurs, elle possède de bonnes propriétés d'isolation électrique, et notamment protège l'accessoire des surtensions. La couche réticulée est facile à fabriquer et à installer, et elle permet de protéger thermiquement de façon homogène un accessoire pour câble et éventuellement les parties du ou des câble(s) reliées à l'accessoire, quel que soit la structure et/ou les reliefs propres à l'accessoire et éventuellement auxdites parties. En outre, la couche réticulée est flexible, ce qui lui permet d'épouser facilement la structure et/ou les reliefs propres à l'accessoire et éventuellement aux parties du ou des câble(s) reliées à l'accessoire.

Dans l'invention, l'expression « accessoire pour câble » signifie un accessoire destiné à être relié à un câble.

La couche réticulée peut comprendre environ de 1 à 30% en poids, et de préférence environ de 2 à 20% en poids de nitrure de bore, par rapport au poids total de la couche réticulée.

La couche réticulée peut comprendre environ de 2 à 40% en poids, et de préférence environ de 5 à 30% en poids de carbure de silicium, par rapport au poids total de la couche réticulée.

Selon une forme de réalisation particulièrement préférée de l'invention, la couche réticulée comprend environ de 5 à 15% en poids de nitrure de bore, et environ de 15 à 25% en poids de carbure de silicium, par rapport au poids total de la couche réticulée. Cela permet ainsi d'obtenir un bon compromis en termes de conductivité thermique, de coût de revient et de flexibilité de la couche réticulée.

Avantageusement, le rapport massique de nitrure de bore sur le carbure de silicium varie de 0,2 à 0,8.

Selon un mode de réalisation préféré, la couche réticulée comprend au plus 30% en poids, de nitrure de bore et de carbure de silicium. Cela permet d'améliorer la mise en forme et/ou la fabrication de la couche réticulée (viscosité de la composition réticulable telle que définie ci-après optimisée).

Dans l'invention, l'expression « particules micrométriques » signifie qu'au moins une des dimensions des particules est supérieure ou égale à 1 µm environ.

Selon un mode de réalisation particulier, le nitrure de bore est sous la forme de particules micrométriques, notamment ayant une dimension variant environ de 1 à 100 µm, et de préférence variant environ de 1 à 70 µm. Grâce à de telles dimensions de particules, on obtient une conductivité thermique optimisée, tout en garantissant de bonnes propriétés de flexibilité de la couche réticulée.

Selon un mode de réalisation particulier, le carbure de silicium est sous la forme de particules micrométriques, notamment ayant une dimension variant environ de 1 à 75 µm, et de préférence variant environ de 1 à 25 µm. Grâce à de telles dimensions de particules, on obtient une conductivité thermique améliorée, tout en garantissant de bonnes propriétés de flexibilité de la couche réticulée.

Le nitrure de bore peut être sous la forme de particules sphériques ou sous la forme de particules allongées.

Lorsque les particules de nitrure de bore sont sphériques, elles ont un diamètre moyen variant préférentiellement de 30 à 60 µm environ.

Le nitrure de bore est avantageusement sous la forme de particules allongées. Cela permet ainsi d'augmenter les chemins de conduction thermique au sein de la couche réticulée. Le nitrure de bore peut en particulier être sous la forme de bâtonnets.

Lorsque les particules de nitrure de bore sont allongées, elles ont une longueur moyenne variant préférentiellement de 7 à 9 µm environ, et une largeur moyenne variant préférentiellement de 200 à 300 nm environ.

Le carbure de silicium est de préférence sous la forme de particules sphériques. Cela permet ainsi d'augmenter la surface de contact au sein de la couche réticulée.

Selon une forme de réalisation particulièrement préférée de l'invention, le nitrure de bore est sous la forme de particules allongées et le carbure de silicium est sous la forme de particules sphériques. Cela permet ainsi d'améliorer la conductivité thermique de la couche réticulée. En particulier, les interactions entre les particules de nitrure de bore et de carbure de silicium sont favorisées au sein de la couche réticulée.

Dans l'invention, la dimension, le diamètre moyen, la longueur moyenne ou la largeur moyenne des particules est de préférence mesurée à l'aide d'un microscope électronique à balayage.

De préférence, la couche réticulée comprend au plus 1% en poids, de préférence au plus 0,5% en poids, de façon particulièrement préférée au plus 0,01% en poids, et de façon plus particulièrement préférée ne comprend pas, d'autre(s) nitrure(s) que le nitrure de bore, tels que le nitrure d'aluminium ou le nitrure de silicium.

De préférence, la couche réticulée comprend au plus 10% en poids, de préférence au plus 5% en poids, de façon particulièrement préférée au plus 1% en poids, et de façon plus particulièrement préférée ne comprend pas, d'alumine.

Le matériau polymère peut comprendre un ou plusieurs polymère(s), le terme « polymère » pouvant s'entendre comme tout type de polymère bien connu de l'homme du métier tel qu'un homopolymère ou un copolymère (e.g. copolymère séquencé, copolymère statistique, terpolymère, etc...).

La couche réticulée peut comprendre au moins 50% en poids environ, et de préférence au moins 60% en poids environ de matériau polymère, par rapport au poids total de la couche réticulée.

Avantageusement, la couche réticulée comprend de 55% à 85% en poids, et de préférence environ de 60% à 80% en poids de matériau polymère, par rapport au poids total de la couche réticulée.

Le matériau polymère peut être du type thermoplastique ou élastomère.

Le matériau polymère est de préférence choisi parmi les polyorganosiloxanes.

Un polyorganosiloxane comprend généralement du silicium, de l'oxygène, de l'hydrogène et du carbone. En particulier, une partie du silicium et de l'oxygène forment des unités de type Si-O-Si.

Selon une forme de réalisation préférée de l'invention, un polyorganosiloxane convenant à titre de matériau polymère dans la couche réticulée de l'invention comporte des unités de formule (I) suivante : 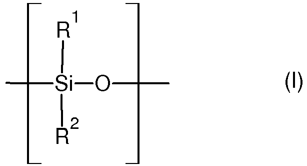 dans laquelle les groupements R¹ et R², identiques ou différents l'un de l'autre et d'une unité à l'autre, sont des groupes hydrocarbonés, notamment choisis parmi des groupements alkyles, halogénoalkyles, cycloalkyles, aralkyles, cyanoalkyles, alkényles, halogénoalkényles, cycloalkényles, aryles, halogénoaryles et alkylaryles.

Le polyorganosiloxane peut comprendre n unités de formule (I) [-Si(R¹)(R²)-O-]. n est de préférence supérieur ou égal à 5, et de préférence encore compris entre 5 et 10000.

Les groupements alkyles, halogénoalkyles, aralkyles, alkylaryles et cyanoalkyles peuvent avoir de 1 à 20 atomes de carbone, de préférence de 1 à 6 atomes de carbone, et de préférence encore de 1 à 3 atomes de carbone.

Les groupements alkényles et halogénoalkényles peuvent avoir de 2 à 10 atomes de carbone, et de préférence de 2 à 6 atomes de carbone.

Les groupements cycloalkyles, cycloalkényles, aryles, et halogénoaryles peuvent avoir de 3 à 10 atomes de carbone, et de préférence de 3 à 6 atomes de carbone
R¹ (respectivement R²) est de préférence un groupement alkyle, et de préférence encore un groupement méthyle.

Le polyorganosiloxane peut répondre à la formule (II) suivante : 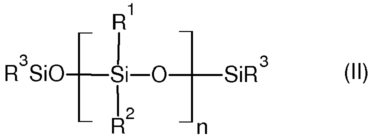
dans laquelle R¹, R² et n ont la même définition que ci-dessus, et
R³ représente un groupe hydrocarboné, notamment choisi parmi des groupements alkyles, alkényles, et alcoxyalkyles.

Les groupements alkyles et alkényles sont tels que définis ci-dessus.

Les groupements alkoxyalkyles peuvent avoir de 1 à 10 atomes de carbone, de préférence de 1 à 6 atomes de carbone, et de préférence encore de 1 à 3 atomes de carbone.

Selon une forme de réalisation particulièrement préférée de l'invention, le matériau polymère est choisi parmi les élastomères de silicone (ou caoutchoucs de silicone). Ces derniers présentent l'avantage de conférer à la couche une excellente inertie chimique et une bonne résistance au feu.

La couche réticulée peut avoir une conductivité thermique d'au moins 0,18 W/m.K, de préférence d'au moins 0,20 W/m.K, de préférence encore d'au moins 0,25 W/m.K, de préférence encore d'au moins 0,3 W/m.K, de préférence encore d'au moins 0,35 W/m.K, et de préférence encore d'au moins 0,40 W/m.K, notamment à 35°C.

La conductivité thermique de la couche réticulée peut être mesurée à l'aide d'un appareil vendu sous la dénomination commerciale Hot Disk TPS 2500S, par la société Hot Disk, à environ 35°C.

Grâce à une bonne conductivité thermique de la couche réticulée, l'évacuation de la chaleur générée au niveau de l'accessoire est facilitée, sans toutefois dégrader les propriétés électriques et mécaniques de l'accessoire.

La couche de l'invention est une couche réticulée électriquement isolante. Dans la présente invention, la couche réticulée peut être par exemple caractérisée par la détermination de son taux de gel ou degré de réticulation, notamment déterminé par extraction d'un échantillon de ladite couche dans le xylène à 100°C pendant 24 heures.

Plus particulièrement, la couche réticulée peut avoir un taux de gel, ou degré de réticulation, d'au moins 50%, de préférence d'au moins 60%, de préférence d'au moins 70%, et de façon particulièrement préférée d'au moins 80%.

Dans la présente invention, on entend par « couche électriquement isolante » une couche dont la conductivité électrique peut être d'au plus 1.10⁻⁹ S/m, et de préférence d'au plus 1.10⁻¹⁰ S/m (siemens par mètre) (à 25°C).

La couche réticulée est de préférence sous la forme d'un gel. Cela permet ainsi de lui conférer une flexibilité suffisante pour pouvoir épouser la structure et/ou les reliefs de l'accessoire et/ou d'obtenir de bonnes propriétés d'étanchéité.

Avantageusement, la couche réticulée est une couche non poreuse.

La couche peut être réticulée par des techniques bien connues de l'homme du métier.

La couche réticulée peut avantageusement avoir une épaisseur variable, notamment le long de la partie de l'accessoire pour câble électrique à protéger. Elle peut être une enveloppe continue, notamment formée d'une seule pièce.

La couche réticulée de l'accessoire de l'invention peut être avantageusement obtenue à partir d'une composition réticulable comprenant le nitrure de bore, le carbure de silicium et au moins un précurseur dudit matériau polymère.

Selon une forme de réalisation particulièrement préférée de l'invention, la composition réticulable comprend environ de 2 à 20% en poids de nitrure de bore, et environ de 5 à 30% en poids de carbure de silicium, et de préférence environ de 5 à 15% en poids de nitrure de bore, et environ de 15 à 25% en poids de carbure de silicium, par rapport au poids total de la composition réticulable. Cela permet ainsi d'obtenir un bon compromis en termes de conductivité thermique, de coût de revient et de processabilité de la composition réticulable.

La composition réticulable peut comprendre environ de 55% à 85% en poids, et de préférence environ de 60% à 80% en poids de précurseur dudit matériau polymère, par rapport au poids total de la composition réticulable.

Le précurseur dudit matériau polymère peut être choisi parmi un oligomère réticulable, un polymère réticulable, et un monomère dudit matériau polymère.

Le précurseur dudit matériau polymère possède de préférence au moins une fonction réactive. Cela permet ainsi de favoriser la polymérisation et/ou la réticulation pour obtenir ledit matériau polymère de la couche réticulée.

Selon une forme de réalisation préférée de l'invention, le précurseur dudit matériau polymère est un précurseur de polyorganosiloxanes, et de préférence encore d'un élastomère de silicone.

Dans ce mode de réalisation, les fonctions réactives du précurseur peuvent être choisies parmi les fonctions Si-H, Si-alcényle en C₂-C₆ (e.g. Si-vinyle) et les fonctions Si-O-alkyle en C₁-C₆.

Selon une forme de réalisation préférée, le précurseur de polyorganosiloxanes est :
- un polymère réticulable comprenant au moins une fonction réactive Si-H et au moins une fonction réactive Si-alcényle en C₂-C₆ (e.g. Si-vinyle),
- au moins un monomère choisi parmi les siloxanes, les alcoxysilanes, et les alkylsilanes, ledit monomère comprenant au moins une fonction réactive choisie parmi les fonctions Si-H et Si-alcényle en C₂-C₆ (e.g. Si-vinyle), ou
- au moins deux monomères choisis parmi les siloxanes, les alcoxysilanes, et les alkylsilanes, un desdits monomères comprenant au moins une fonction réactive Si-H tel qu'un dialcoxyalkylsilane, et l'autre desdits monomères comprenant au moins une fonction réactive Si-alcényle en C₂-C₆ (e.g. Si-vinyle) tel qu'un alcényl(dialkyl)alcoxysilane.

La composition réticulable peut comprendre en outre un catalyseur de réticulation, notamment un composé à base de platine. Il peut être choisi parmi le platine métallique, les sels de platine tels que les chlorures de platine (e.g. dichlorure de platine : PtCl₂, tetrachlorure de platine : PtCl₄) ainsi que parmi les complexes à base de platine tels que le catalyseur de Karstedt qui est un complexe de platine (0) et de divinyltétraméthylsiloxane.

Selon une forme de réalisation particulièrement préférée de l'invention, la quantité d'agent de réticulation au sein de la composition réticulable varie environ de 0,1 à 8% en poids, par rapport au poids total de matériau(x) polymère(s) et/ou de précurseurs de matériau(x) polymère(s).

La composition réticulable selon l'invention peut comprendre un agent de réticulation tel que par exemple un peroxyde organique.

Dans un mode de réalisation particulier, le peroxyde organique utilisable selon l'invention est un peroxyde di-tertiaire d'alkyle ou d'aralkyle, de préférence choisi parmi le peroxyde de di-ter-butyle, le peroxyde de 2,4-dichlorobenzoyle (DCBP), le peroxyde de di(ter-butylperoxyisopropyl)benzène, le peroxyde de dicumyle, et le 2,5-diméthyl-2,5-di(ter-butylperoxy)hexane (DBPH).

La quantité de peroxyde organique au sein de la composition réticulable peut varier environ de 0,1 à 8% en poids, par rapport au poids total de matériau(x) polymère(s) et/ou de précurseurs de matériau(x) polymère(s).

La couche réticulée fait office de protection électrique, mécanique et thermique de l'accessoire pour câble électrique. Elle peut entourer au moins partiellement ou totalement ledit accessoire.

Elle est de préférence une couche indépendante de l'accessoire. En d'autres termes, elle peut être séparée de l'accessoire pour câble sans causer le moindre dommage mécanique et/ou électrique audit accessoire pour câble, et notamment sans causer le moindre dommage à la couche la plus extérieure de l'accessoire pour câble.

En d'autres termes, la couche réticulée ne fait de préférence pas partie intégrante de l'accessoire pour câble en tant que tel, permettant ainsi de préserver l'intégrité électrique et/ou mécanique de l'accessoire pour câble. Plus particulièrement, les propriétés électriques et mécaniques de l'accessoire pour câble avec lequel la couche réticulée est associée, restent intactes.

La couche réticulée de l'invention peut entourer l'élément le plus externe de l'accessoire ou la couche la plus externe de l'accessoire.

La couche réticulée est de préférence en contact physique direct avec l'accessoire, et notamment avec l'élément le plus externe ou la couche la plus externe de l'accessoire.

L'accessoire pour câble électrique est de préférence destiné à entourer au moins une partie ou extrémité d'un câble électrique.

L'accessoire comporte au moins un élément semi-conducteur et au moins un élément électriquement isolant, ces éléments étant destinés à entourer au moins une partie ou extrémité d'un câble électrique.

L'élément semi-conducteur est bien connu pour contrôler la géométrie du champ électrique, lorsque le câble électrique, destiné à être associé audit accessoire, est sous tension.

L'accessoire peut être typiquement un corps longitudinal creux, tel que par exemple une jonction pour câble électrique. La jonction permet en particulier de connecter ensemble deux câbles électriques, la jonction étant destinée à entourer au moins une partie ou extrémité de ces deux câbles électriques.

Selon une forme de réalisation particulièrement préférée de l'invention, l'accessoire est une jonction de câble électrique comprenant :
- un premier élément semi-conducteur, notamment entourant une partie ou extrémité des deux câbles électriques,
- un élément électriquement isolant, notamment entourant le premier élément semi-conducteur et une partie ou extrémité des deux câbles électriques, et
- un deuxième élément semi-conducteur, notamment entourant une partie ou extrémité des deux câbles électriques.

Le premier élément semi-conducteur et le second élément semi-conducteur sont de préférence séparés par l'élément électriquement isolant.

La jonction peut en outre comprendre une ou plusieurs couches de bourrage entourant le deuxième élément semi-conducteur.

La jonction peut en outre comprendre un troisième élément semi-conducteur, notamment entourant l'élément électriquement isolant.

La jonction peut en outre comprendre une couche d'un matériau auto-amalgamant entourant le troisième élément semi-conducteur, ladite couche d'un matériau auto-amalgamant étant préférentiellement entourée d'un tricot de cuivre, notamment fixé à ladite couche au moyen d'un ruban de polychlorure de vinyle (PVC).

L'invention a pour deuxième objet un dispositif électrique tel que défini dans la revendication 11, comprenant :
- au moins un câble électrique, et
- un ensemble selon la revendication 1.

Le câble électrique peut être un câble terrestre, enterré ou sous-marin.

La couche réticulée entoure avantageusement au moins une partie ou extrémité dudit câble électrique.

Dans la présente invention, on entend par le terme « câble électrique » un câble électrique comprenant au moins un élément électriquement conducteur allongé, et au moins une couche polymère ou une couche électriquement isolante, ladite couche polymère ou couche électriquement isolante entourant l'élément électriquement conducteur allongé.

L'élément électriquement conducteur allongé du câble électrique peut être un fil métallique (monobrin) ou une pluralité de fils métalliques (multibrins), torsadé(s) ou non, notamment en cuivre ou en aluminium, ou en un de leurs alliages.

Le câble électrique est de préférence un câble électrique haute tension (notamment supérieure à 60 kV).

Plus particulièrement, le câble électrique du dispositif peut comprendre :
- un élément électriquement conducteur allongé,
- une première couche semi-conductrice entourant l'élément électriquement conducteur allongé,
- une couche électriquement isolante entourant la première couche semi-conductrice, et
- une deuxième couche semi-conductrice entourant la couche électriquement isolante.

La deuxième couche semi-conductrice peut être entourée par un écran métallique de mise à la terre et/ou de protection.

La deuxième couche semi-conductrice peut être entourée par une gaine extérieure de protection, cette gaine de protection entourant l'écran métallique lorsqu'il existe.

Le câble électrique peut comprendre en outre entre l'élément électriquement conducteur allongé et la première couche semi-conductrice, un ou plusieurs rubans, notamment qui permettant de rassembler les brins de l'élément électriquement conducteur allongé lorsqu'il est multibrins.

Le câble électrique peut comprendre en outre une ou plusieurs couches gonflantes, de préférence sous la forme de ruban(s) entre la deuxième couche semi-conductrice et l'écran métallique lorsqu'il existe et/ou entre l'écran métallique et la gaine extérieure lorsqu'ils existent. Ces couches gonflantes permettant d'assurer l'étanchéité longitudinale du câble électrique à l'eau.

Lorsque l'accessoire est une jonction, le dispositif électrique peut comprendre en outre un deuxième câble électrique, notamment tel que défini précédemment. La jonction permet alors de connecter ensemble les deux câbles électriques.

Selon un mode de réalisation particulier, la jonction entoure au moins une partie ou extrémité de chacun desdits câbles électriques. Plus particulièrement, l'extrémité de chaque câble destiné à être connecté est positionnée à l'intérieur de ladite jonction.

Selon ce mode de réalisation, la couche réticulée peut entourer au moins une partie ou extrémité de chacun desdits câbles électriques, notamment au niveau de la jonction, et la jonction.

Le dispositif peut comprendre en outre un élément de positionnement ou de protection de la couche réticulée, ledit élément entourant la couche réticulée.

Ledit élément de positionnement ou de protection est de préférence configuré pour permettre la réalisation de l'étape i) telle que décrite ci-après. En d'autres termes, ledit élément de positionnement ou de protection permet de préférence l'application de la composition réticulable.

L'élément de protection peut être un élément métallique. Cet élément peut être l'élément le plus externe du dispositif.

Le métal de l'élément métallique peut être choisi parmi le cuivre ou un alliage de cuivre.

Cet élément de protection peut assurer la protection mécanique de l'accessoire, et en particulier de la jonction, au sein du dispositif. Il est de préférence en matériau rigide. L'élément de protection peut également permettre de positionner la couche réticulée autour de l'accessoire et en particulier autour de la jonction.

L'élément de protection peut être un manchon.

L'élément de positionnement peut être en métal (e.g. cuivre) ou en matériau polymère (e.g. polyéthylène).

L'élément de positionnement peut permettre de positionner la couche réticulée autour de l'accessoire et en particulier autour de la jonction. Une fois la couche réticulée positionnée, cet élément de positionnement peut être enlevé, et par exemple remplacé par l'élément de protection. Il fait alors par exemple office de moule.

Un troisième objet de l'invention est l'utilisation d'une couche réticulée électriquement isolante telle que définie dans la revendication 13, autour d'un accessoire pour câble électrique dans un ensemble selon la revendication 1, ou dans un dispositif électrique selon la revendication 11, notamment pour favoriser l'évacuation de la chaleur.

Un quatrième objet de l'invention concerne un procédé de fabrication d'un ensemble conforme au premier objet de l'invention, selon la revendication 14.

À l'issue des étapes i) et ii), l'accessoire de l'étape i) est entouré (au moins partiellement ou totalement) par la couche réticulée.

La composition réticulable et la couche réticulée sont telles que définies dans l'invention.

L'étape i) peut être effectuée en coulant la composition réticulable sur l'accessoire, de préférence manuellement.

L'étape i) est de préférence effectuée à température ambiante (i.e. 18-25°C).

Les étapes i) et ii) peuvent être concomitantes. En particulier, la réticulation peut commencer pendant l'application de la composition réticulable autour de l'accessoire (étape i)), et se terminer à l'issue de l'étape ii).

L'étape ii) peut être réalisée à température ambiante (i.e. 18-25°C) ou par voie thermique, notamment à une température supérieure à 25°C, notamment variant environ de 30 à 200°C environ, et de préférence variant de 35 à 60°C.

Dans la présente invention, la température de réticulation et le temps de réticulation de la couche réticulée mis en oeuvre sont notamment fonctions de l'épaisseur de la couche, du nombre de couches, de la présence ou non d'un catalyseur de réticulation, du type de réticulation, ...etc.

L'homme du métier pourra facilement déterminer ces paramètres en suivant l'évolution de la réticulation grâce à la détermination du taux de gel pour obtenir une couche réticulée.

L'étape ii) (respectivement l'étape i)) peut être effectuée sous pression, notamment à l'aide d'une pompe. Cela permet ainsi d'éviter la formation de bulles d'air dans la couche réticulée.

Le procédé peut comprendre en outre avant l'étape i), une étape i₀) de préparation de la composition réticulable.

L'étape i₀) peut comprendre le mélange du nitrure de bore, du carbure de silicium et d'un matériau polymère ou au moins d'un précurseur d'un matériau polymère tels que définis dans le premier objet de l'invention.

L'étape i₀) est de préférence effectuée à l'aide d'un mélangeur.

Les étapes i₀) et ii) peuvent être concomitantes. Dans ce cas, la réticulation peut commencer dès la préparation de la composition réticulable (étape i₀)), et se terminer à l'issue de l'étape ii).

Il est préférable que la réticulation ii) commence après les étapes i₀) et i), notamment pour faciliter l'étape i).

L'accessoire utilisé dans l'étape i) est de préférence une jonction.

L'invention a pour cinquième objet un procédé de fabrication d'un dispositif conforme au deuxième objet de l'invention, caractérisé en ce qu'il comprend au moins les étapes suivantes :
- une étape a) d'installation d'un accessoire pour câble électrique (e.g. accessoire exempt de la couche réticulée), et
- les étapes i) et ii) telles que définies dans le quatrième objet de l'invention.

L'étape a) peut être effectuée par application d'un accessoire, autour d'au moins une partie ou extrémité d'un câble électrique.

Lorsque l'accessoire est une jonction, l'étape a) peut en particulier permettre d'installer une jonction de câble entourant au moins deux câbles électriques.

De préférence, l'étape a) peut être effectuée en soudant les extrémités de deux câbles électriques destinés à être connectés, et en appliquant la jonction autour des extrémités de deux câbles électriques destinés à être connectés.

Le procédé peut comprendre en outre avant l'étape i), une étape i₀) telle que définie dans le quatrième objet de l'invention.

Le procédé peut comprendre en outre avant l'étape i) ou avant l'étape i₀), une étape a₁) d'application d'un élément de positionnement ou de protection de la couche réticulée tel que défini dans l'invention, autour de l'accessoire, l'élément de positionnement ou de protection étant configuré pour permettre la réalisation de l'étape i).

A l'issue de l'étape a₁), l'élément de positionnement ou de protection entoure la couche réticulée.

L'étape a₁) est généralement effectuée entre les étapes a) et i), ou a) et i₀). Selon ce mode de réalisation, l'accessoire pour câble est d'abord installé selon l'étape a), puis l'élément de positionnement ou de protection est appliqué autour de l'accessoire selon l'étape a₁), puis la couche réticulée est formée autour de l'accessoire selon les étapes i), ii) [et éventuellement i₀) avant l'étape i)] telles que définies dans l'invention.

En d'autres termes, dans ce mode de réalisation, la configuration de l'élément de positionnement ou de protection est telle qu'elle permet l'application de la composition réticulable autour de l'accessoire selon l'étape i).

À titre d'exemple, l'élément de positionnement ou de protection peut comprendre un ou plusieurs orifices pour permettre l'étape i).

Par ailleurs, l'élément de positionnement ou de protection peut être configuré (au niveau de sa forme et de sa taille) pour qu'à l'issue de l'étape a₁), un espace suffisant soit formé entre l'accessoire, notamment la surface externe de l'accessoire, et ledit élément. Cela permet ainsi de faciliter la diffusion de la composition réticulable et sa réticulation dans ledit espace au cours des étapes i) et ii).

Lorsque l'élément est un élément de positionnement tel que défini au troisième objet de l'invention, celui-ci peut être enlevé après l'étape ii), dès lors que la couche réticulée est formée autour de l'accessoire. Le procédé peut alors comprendre en outre, une étape d'application d'un élément de protection tel que défini au troisième objet de l'invention autour de la couche réticulée.

L'invention a pour sixième objet un kit pour raccorder deux câbles électriques au moyen d'une jonction telle que définie dans l'invention, selon la revendication 17.

L'invention a pour septième objet un ensemble comprenant un accessoire pour câble électrique et une couche réticulée électriquement isolante tel que défini dans la revendication 18.

Les première et deuxième charges sont de préférence de nature chimique différente. En d'autres termes, elles ont des compositions chimiques différentes.

La première charge peut avoir une conductivité thermique CT₁ d'au plus 300 W·m⁻¹·K⁻¹ à 35°C.

La deuxième charge peut avoir une conductivité thermique CT₂ d'au moins 340 W·m⁻¹·K⁻¹ à 35°C, et de préférence d'au moins 350 W·m⁻¹·K⁻¹ à 35°C.

La couche réticulée de l'accessoire peut être avantageusement obtenue à partir d'une composition réticulable comprenant la première charge, la deuxième charge et au moins un précurseur dudit matériau polymère.

L'accessoire, la couche réticulée électriquement isolante, le matériau polymère et le précurseur dudit matériau polymère sont tels que définis dans le premier objet de l'invention.

Selon une forme de réalisation particulièrement préférée de l'invention, la première charge est du nitrure de bore. Le nitrure de bore peut être tel que défini dans le premier objet de l'invention.

Selon une forme de réalisation particulièrement préférée de l'invention, la deuxième charge est du carbure de silicium. Le carbure de silicium peut être tel que défini dans le premier objet de l'invention.

D'autres caractéristiques et avantages de la présente invention apparaîtront à la lumière de la description d'un exemple non limitatif d'un dispositif selon l'invention fait en référence aux figures.

### Exemples

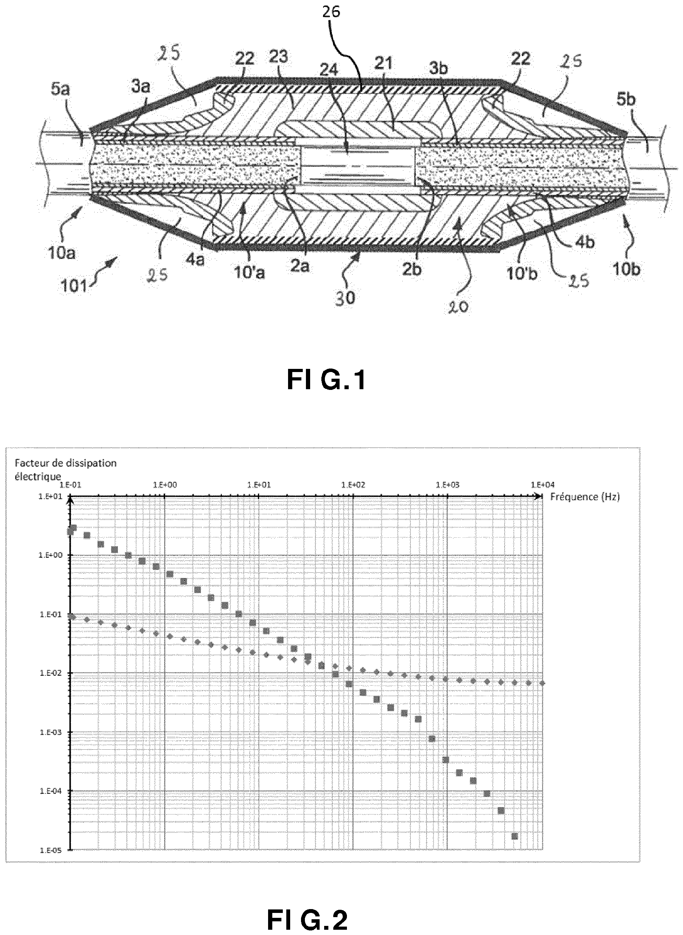

La figure 1 représente une vue schématique d'un dispositif en coupe longitudinale selon l'invention, comprenant deux câbles électriques associés à une jonction, l'ensemble étant entouré par une couche réticulée telle que définie dans l'invention.

Pour des raisons de clarté, seuls les éléments essentiels pour la compréhension de l'invention ont été représentés de manière schématique, et ceci sans respect de l'échelle.

La figure 1 représente un dispositif 101 comprenant une jonction 20 entourant en partie deux câbles électriques 10a et 10b, ainsi qu'une couche réticulée 30 conforme à l'invention entourant la jonction 20 et au moins une partie des deux câbles électriques 10a et 10b.

Cette couche réticulée 30 entoure la jonction 20 et au moins une partie ou extrémité des câbles électriques 10a et 10b.

Plus particulièrement, la couche réticulée 30 s'étend le long du dispositif 101 autour d'une partie du câble électrique 10a, d'une partie du câble électrique 10b, et de l'ensemble de la jonction 20.

À titre d'exemple de câbles électriques et de jonction, on peut décrire plus particulièrement les câbles électriques 10a et 10b ainsi que la jonction 20 de la figure 1.

Les câbles électriques 10a et 10b comprennent respectivement une extrémité 10'a et 10'b, destinées à être connectées électriquement et entourées par la jonction 20.

Le corps de la jonction 20 comporte un premier élément semi-conducteur 21 et un second élément semi-conducteur 22, séparés par un élément électriquement isolant 23, lesdits éléments semi-conducteur 21, 22 et ledit élément électriquement isolant 23 entourent les extrémités 10'a et 10'b respectivement des câbles électriques 10a et 10b. L'élément électriquement isolant 23 entoure le premier élément semi-conducteur.

Le premier câble électrique 10a comprend un élément électriquement conducteur allongé 2a, une première couche semi-conductrice 3a entourant l'élément électriquement conducteur allongé 2a, une couche électriquement isolante 4a entourant la première couche semi-conductrice 3a, et une seconde couche semi-conductrice 5a entourant la couche électriquement isolante 4a.

Le second câble électrique 10b comprend un élément électriquement conducteur allongé 2b, une première couche semi-conductrice 3b entourant l'élément électriquement conducteur allongé 2b, une couche électriquement isolante 4b entourant la première couche semi-conductrice 3b, et une seconde couche semi-conductrice 5b entourant la couche électriquement isolante 4b.

Les éléments électriquement conducteurs allongés 2a et 2b respectivement du premier câble électrique 10a et du second câble électrique 10b sont soudés à leurs extrémités 10'a et 10'b au niveau de la zone 24, de manière à connecter électriquement lesdits câbles.

La seconde couche semi-conductrice 5a, 5b est au moins partiellement dénudée afin que la couche électriquement isolante 4a, 4b soit au moins partiellement positionnée à l'intérieur de la jonction 20, sans être recouverte de la seconde couche semi-conductrice 5a, 5b du câble.

À l'intérieur de la jonction 20, les couches électriquement isolantes 4a, 4b sont directement en contact physique avec l'élément électriquement isolant 23 et le premier élément semi-conducteur 21 de la jonction 20. Les deuxièmes couches semi-conductrices 5a, 5b sont directement en contact physique avec le second élément semi-conducteur 22 de la jonction 20.

La jonction 20 peut en outre comprendre une ou plusieurs couches de bourrage 25 entourant le deuxième élément semi-conducteur 22.

La jonction 20 peut en outre comprendre un troisième élément semi-conducteur 26, notamment entourant l'élément électriquement isolant 23.

La jonction 20 peut en outre comprendre une couche d'un matériau auto-amalgamant entourant le troisième élément semi-conducteur, ladite couche d'un matériau auto-amalgamant étant préférentiellement entourée d'un tricot de cuivre, notamment fixé à ladite couche au moyen d'un ruban de polychlorure de vinyle (PVC).

### Fabrication d'un dispositif conforme à l'invention

Une jonction de câble a été appliquée autour des extrémités aboutées et soudées de deux câbles électriques haute tension vendue sous la dénomination commerciale VM-A/HOP. La jonction entoure au moins les deux extrémités desdits câbles. La jonction comprend : un premier élément semi-conducteur entourant lesdites extrémités, un élément isolant entourant ledit premier élément semi-conducteur et lesdites extrémités, et un deuxième élément semi-conducteur entourant lesdites extrémités. La jonction comprend en outre un troisième élément semi-conducteur entourant l'élément électriquement isolant, une couche d'un matériau auto-amalgamant entourant le troisième élément semi-conducteur, et des couches de bourrage entourant le deuxième élément semi-conducteur.

Une enveloppe métallique en cuivre a été appliquée autour de la jonction, de manière à entourer la jonction et au moins une partie ou extrémité desdits câbles électriques.

2 kg de nitrure de bore vendu sous la dénomination commerciale Powder Cooling Filler Platelets par la société 3M Technical Ceramics et 4 kg de carbure de silicium vendu sous la dénomination commerciale SIKA TECH par la société Saint-Gobain Ceramic Materials GmBH ont été mélangés à un précurseur d'un élastomère de silicone vendu sous la dénomination commerciale Bluesil RT Gel 8213 A, pour former une première composition. En parallèle, 2 kg de nitrure de bore et 4 kg de carbure de silicium tels que décrits ci-dessus ont été mélangés à un précurseur d'un élastomère de silicone vendu sous la dénomination commerciale Bluesil RT Gel 8213 B pour former une deuxième composition. Une des compositions précitées comprend un catalyseur de réticulation à base de platine. Chacune des deux compositions précitées ont été homogénéisées à l'aide d'un mélangeur vendu sous la dénomination commerciale DAC 400 Mixer par la société Speed Mixer.

Puis, les deux compositions précitées ont été réunies et mélangées, pour former une composition réticulable résultante.

La composition réticulable résultante a ensuite été coulée manuellement dans l'espace formé entre la couche la plus externe de la jonction et l'enveloppe métallique. Pendant l'étape de remplissage, une pompe est utilisée pour éliminer les éventuelles bulles de gaz formées au sein de la composition réticulable.

La composition a été réticulée pendant environ 24 heures à température ambiante (e.g. 18-25°C) pour former une couche réticulée **C1** entourant ladite jonction.

À titre comparatif, une couche réticulée **CA** sans nitrure de bore et sans carbure de silicium a été préparée selon le même procédé que celui utilisé pour la couche **C1.** La couche réticulée **CA** ne fait donc pas partie de l'invention.

La conductivité thermique d'un échantillon de couche réticulée **C1** de dimensions : 44 m x 48 m x 8 mm, et d'un échantillon de couche réticulée **CA** de même dimension, a été mesurée à l'aide d'un appareil vendu sous la dénomination commerciale Hot Disk TPS 2500S, par la société Hot Disk, à environ 35°C.

L'échantillon de couche réticulée **C1** présente une conductivité thermique de 0,44 W/m.K à 35°C, et l'échantillon de couche réticulée **CA** présente une conductivité thermique de 0,17 W/m.K à cette même température.

Des tests de spectroscopie diélectrique d'un échantillon de couche réticulée **C1** de dimensions : 44 mm x 48 mm x 1,52 mm, et d'un échantillon de couche réticulée **CA** de même dimension, ont été effectués à l'aide d'un appareil vendu sous la dénomination commerciale Alpha Dielectric Analyzer par la société Novovontrol. Les mesures ont été faites à 1000 Volts, avec des fréquences allant de 0,1 Hz à 10000 Hz, afin d'appliquer un champ électrique de 0,658 kV/mm.

Ces tests ont permis de déterminer le facteur de dissipation électrique (ou facteur de perte) [évalué à partir de la tangente delta (tan δ) selon les normes IEC 60250 (1969) et IEC 62631, à température ambiante, soit à 18-25°C], en fonction de la fréquence.

La figure 2 montre la courbe du facteur de dissipation électrique en fonction de la fréquence (Hz), pour l'échantillon de couche réticulée **C1** selon l'invention (courbe avec les losanges) et pour l'échantillon de couche réticulée **CA** (courbe avec les carrés). La tangente de l'angle de perte donne une indication sur l'énergie dissipée dans un diélectrique sous forme de chaleur.

La courbe de la couche réticulée **C1** de l'invention présente une pente négative, ce qui montre qu'elle possède un caractère capacitif (isolant).

La valeur de la conductivité électrique de la couche réticulée **C1** a été mesurée à l'aide d'un appareil vendu sous la dénomination commerciale Alpha Dielectric Analyzer par la société Novovontrol. Elle est de 2 × 10⁻¹² S/m pour une fréquence de 0,1 Hz et d'au plus 10⁻⁹ S/m pour des fréquences inférieures à 100 Hz (fréquences utilisées en courant continu), ce qui montre le caractère isolant d'une telle couche réticulée.

D'autres tests ont montré que la couche réticulée entourant l'accessoire permet d'obtenir une diminution de la température au point le plus chaud de la jonction d'environ 10°C.

## Revendications

1. Ensemble comprenant un accessoire pour câble électrique et une couche réticulée électriquement isolante (30) où ledit accessoire comporte au moins un élément semi-conducteur et au moins un élément électriquement isolant, ces éléments étant destinés à entourer au moins une partie ou extrémité d'un câble électrique (10a, 10b), et où ledit accessoire est entouré par ladite couche réticulée électriquement isolante (30), **caractérisé en ce que** ladite couche réticulée électriquement isolante (30) comprend au moins un matériau polymère, du nitrure de bore et du carbure de silicium.

2. Ensemble selon la revendication 1, **caractérisé en ce que** la couche réticulée électriquement isolante (30) comprend de 1 à 30% en poids de nitrure de bore, par rapport au poids total de la couche réticulée.

3. Ensemble selon la revendication 1 ou 2, **caractérisé en ce que** la couche réticulée électriquement isolante (30) comprend de 2 à 40% en poids de carbure de silicium, par rapport au poids total de la couche réticulée.

4. Ensemble selon l'une quelconque des revendications précédentes, **caractérisé en ce que** le matériau polymère est choisi parmi les polyorganosiloxanes.

5. Ensemble selon l'une quelconque des revendications précédentes, **caractérisé en ce que** le nitrure de bore est sous la forme de particules allongées.

6. Ensemble selon l'une quelconque des revendications précédentes, **caractérisé en ce que** le carbure de silicium est sous la forme de particules sphériques.

7. Ensemble selon l'une quelconque des revendications précédentes, **caractérisé en ce que** le carbure de silicium et le nitrure de bore sont sous la forme de particules micrométriques.

8. Ensemble selon l'une quelconque des revendications précédentes, **caractérisé en ce que** la couche réticulée électriquement isolante (30) a une conductivité thermique d'au moins 0,18 W/m.K.

9. Ensemble selon l'une quelconque des revendications précédentes, **caractérisé en ce que** la couche réticulée électriquement isolante (30) est en contact physique direct avec l'accessoire.

10. Ensemble selon l'une quelconque des revendications précédentes, **caractérisé en ce qu'**il est une jonction pour câble électrique.

11. Dispositif électrique comprenant :
- au moins un câble électrique (10a, 10b) et
- un ensemble comprenant un accessoire entourant au moins une partie ou extrémité dudit câble électrique (10a, 10b) et une couche réticulée électriquement isolante (30),
**caractérisé en ce que** l'ensemble est tel que défini à l'une quelconque des revendications 1 à 10.

12. Dispositif selon la revendication 11, **caractérisé en ce que** l'accessoire est une jonction, et le dispositif électrique comprend en outre un deuxième câble électrique (10a, 10b), la jonction entourant au moins une partie ou extrémité de chacun desdits câbles électriques.

13. Utilisation d'une couche réticulée électriquement isolante (30) comprenant au moins un matériau polymère, du nitrure de bore et du carbure de silicium, autour d'un accessoire pour câble électrique dans un ensemble tel que défini à l'une quelconque des revendications 1 à 10, ou dans un dispositif électrique tel que défini à l'une quelconque des revendications 11 à 12, pour favoriser l'évacuation de la chaleur.

14. Procédé de fabrication d'un ensemble tel que défini à l'une quelconque des revendications 1 à 10, **caractérisé en ce qu'**il comprend au moins les étapes suivantes :
- une étape i) d'application d'une composition réticulable comprenant au moins un précurseur dudit matériau polymère, le nitrure de bore et le carbure de silicium, autour d'un accessoire pour câble électrique, et
- une étape ii) de réticulation de la composition réticulable.

15. Procédé de fabrication d'un dispositif tel que défini à l'une quelconque des revendications 11 à 12, **caractérisé en ce qu'**il comprend au moins les étapes suivantes :
- une étape a) d'installation d'un accessoire pour câble électrique,
- une étape i) d'application d'une composition réticulable comprenant au moins un précurseur dudit matériau polymère, le nitrure de bore et le carbure de silicium, autour dudit accessoire pour câble électrique, et
- une étape ii) de réticulation de la composition réticulable.

16. Procédé selon la revendication 15, **caractérisé en ce qu'**il comprend en outre avant l'étape i), une étape a₁) d'application d'un élément de positionnement ou de protection de la couche réticulée, autour de l'accessoire, l'élément de positionnement ou de protection étant configuré pour permettre la réalisation de l'étape i).

17. Kit pour raccorder deux câbles électriques (10a, 10b) au moyen d'une jonction telle que définie à la revendication 10, **caractérisé en ce qu'**il comprend :
- le nitrure de bore,
- le carbure de silicium, et
- au moins un précurseur dudit matériau polymère,
les composés précités étant destinés à former une composition réticulable, et
- un élément de positionnement ou de protection de la couche réticulée, ledit élément étant configuré pour permettre l'application de la composition réticulable.

18. Ensemble comprenant un accessoire pour câble électrique (10a, 10b) et une couche réticulée électriquement isolante (30), où ledit accessoire comporte au moins un élément semi-conducteur et au moins un élément électriquement isolant, ces éléments étant destinés à entourer au moins une partie ou extrémité d'un câble électrique (10a, 10b), et où ledit accessoire est entouré par ladite couche réticulée électriquement isolante (30), **caractérisé en ce que** ladite couche réticulée électriquement isolante (30) comprend au moins un matériau polymère, au moins une première charge ayant une conductivité thermique CT₁ ,en W·m⁻¹·K⁻¹, à 35°C, et au moins une deuxième charge ayant une conductivité thermique CT₂ ,en W·m⁻¹·K⁻¹, à 35°C telle que CT₂ ≥ CT₁ + 40 W·m⁻¹·K⁻¹.

## Patentansprüche

1. Anordnung, umfassend ein Stromkabelzubehör und eine elektrisch isolierende vernetzte Schicht (30), wobei das Zubehör mindestens ein halbleitendes Element und mindestens ein elektrisch isolierendes Element aufweist, wobei diese Elemente bestimmt sind, mindestens einen Teil oder ein Ende eines Stromkabels (10a, 10b) zu umgeben, und wobei das Zubehör von der elektrisch isolierenden vernetzten Schicht (30) umgeben ist, **dadurch gekennzeichnet, dass** die elektrisch isolierende vernetzte Schicht (30) mindestens ein Polymermaterial, Bornitrid und Siliziumcarbid umfasst.

2. Anordnung nach Anspruch 1, **dadurch gekennzeichnet, dass** die elektrisch isolierende vernetzte Schicht (30) 1 bis 30 Gew.-% Bornitrid im Verhältnis zum Gesamtgewicht der vernetzten Schicht umfasst.

3. Anordnung nach Anspruch 1 oder 2, **dadurch gekennzeichnet, dass** die elektrisch isolierende vernetzte Schicht (30) 2 bis 40 Gew.-% Siliziumcarbid im Verhältnis zum Gesamtgewicht der vernetzten Schicht umfasst.

4. Anordnung nach einem der vorangehenden Ansprüche, **dadurch gekennzeichnet, dass** das Polymermaterial aus den Polyorganosiloxanen ausgewählt ist.

5. Anordnung nach einem der vorangehenden Ansprüche, **dadurch gekennzeichnet, dass** das Bornitrid in Form von länglichen Partikeln vorliegt.

6. Anordnung nach einem der vorangehenden Ansprüche, **dadurch gekennzeichnet, dass** das Siliziumcarbid in Form von sphärischen Partikeln vorliegt.

7. Anordnung nach einem der vorangehenden Ansprüche, **dadurch gekennzeichnet, dass** das Siliziumcarbid und das Bornitrid in Form von mikrometrischen Partikeln vorliegen.

8. Anordnung nach einem der vorangehenden Ansprüche, **dadurch gekennzeichnet, dass** die elektrisch isolierende vernetzte Schicht (30) eine Wärmeleitfähigkeit von mindestens 0,18 W/m.K hat.

9. Anordnung nach einem der vorangehenden Ansprüche, **dadurch gekennzeichnet, dass** die elektrisch isolierende vernetzte Schicht (30) in direktem physischem Kontakt mit dem Zubehör ist.

10. Anordnung nach einem der vorangehenden Ansprüche, **dadurch gekennzeichnet, dass** sie eine Verbindung für ein Stromkabel ist.

11. Elektrische Vorrichtung, umfassend:
- mindestens ein Stromkabel (10a, 10b) und
- eine Anordnung, die ein Zubehör umfasst, das mindestens einen Teil oder ein Ende des Stromkabels (10a, 10b) umgibt und eine elektrisch isolierende vernetzte Schicht (30),
**dadurch gekennzeichnet, dass** die Anordnung nach einem der Ansprüche 1 bis 10 ist.

12. Vorrichtung nach Anspruch 11, **dadurch gekennzeichnet, dass** das Zubehör eine Verbindung ist und die elektrische Vorrichtung ferner ein zweites Stromkabel (10a, 10b) umfasst, wobei die Verbindung mindestens einen Teil oder ein Ende von jedem der Stromkabel umgibt.

13. Verwendung einer elektrisch isolierenden vernetzten Schicht (30), umfassend mindestens ein Polymermaterial, Bornitrid und Siliziumcarbid, um ein Zubehör für Stromkabel in einer Anordnung nach einem der Ansprüche 1 bis 10 oder in einer elektrischen Vorrichtung nach einem der Ansprüche 11 bis 12, um die Ableitung von Wärme zu fördern.

14. Verfahren zur Herstellung einer Anordnung nach einem der Ansprüche 1 bis 10, **dadurch gekennzeichnet, dass** es mindestens die folgenden Schritte umfasst:
- einen Schritt i) des Anbringens einer vernetzbaren Zusammensetzung, die mindestens einen Vorläufer des Polymermaterials, Bornitrid und Siliziumcarbid umfasst, um ein Zubehör für Stromkabel herum, und
- einen Schritt ii) des Vernetzens der vernetzbaren Zusammensetzung.

15. Verfahren zur Herstellung einer Vorrichtung nach einem der Ansprüche 11 bis 12, **dadurch gekennzeichnet, dass** es mindestens die folgenden Schritte umfasst:
- einen Schritt a) der Installation eines Zubehörs für Stromkabel,
- einen Schritt i) des Anbringens einer vernetzbaren Zusammensetzung, die mindestens einen Vorläufer des Polymermaterials, Bornitrid und Siliziumcarbid umfasst, um ein Zubehör für Stromkabel herum, und
- einen Schritt ii) des Vernetzens der vernetzbaren Zusammensetzung.

16. Verfahren nach Anspruch 15, **dadurch gekennzeichnet, dass** es ferner vor dem Schritt i) einen Schritt a₁) des Anbringens eines Positionierungs- oder Schutzelements der vernetzten Schicht um das Zubehör herum umfasst, wobei das Positionierungs- oder Schutzelement dazu ausgelegt ist, die Durchführung von Schritt i) zu gestatten.

17. Set zum Anschließen von zwei Stromkabeln (10a, 10b) mittels einer Verbindung nach Anspruch 10, **dadurch gekennzeichnet, dass** es umfasst:
- Bornitrid,
- Siliziumcarbid, und
- mindestens einen Vorläufer des Polymermaterials,
wobei die vorgenannten Verbindungen bestimmt sind, eine vernetzbare Zusammensetzung zu bilden, und
- ein Positionierungs- oder Schutzelement der vernetzten Schicht, wobei das Element dazu ausgelegt ist, das Anbringen der vernetzbaren Zusammensetzung zu gestatten.

18. Anordnung, umfassend ein Zubehör für Stromkabel (10a, 10b) und eine elektrisch isolierende vernetzte Schicht (30), wobei das Zubehör mindestens ein halbleitendes Element und mindestens ein elektrisch isolierendes Element aufweist, wobei diese Elemente bestimmt sind, mindestens einen Teil oder ein Ende eines Stromkabels (10a, 10b) zu umgeben, und wobei das Zubehör von der elektrisch isolierenden vernetzten Schicht (30) umgeben ist, **dadurch gekennzeichnet, dass** die elektrisch isolierende vernetzte Schicht (30) mindestens ein Polymermaterial umfasst, wobei mindestens eine erste Charge eine Wärmeleitfähigkeit CT, (in W·m⁻¹·K⁻¹) bei 35 °C hat und mindestens eine zweite Charge eine Wärmeleitfähigkeit CT₂ (in W·m⁻¹·K⁻¹) bei 35 °C hat, so dass CT₂ ≥ CT, + 40 W·m⁻¹·K⁻¹ ist.

## Claims

1. An assembly comprising an accessory for electrical cable and an electrically insulating crosslinked layer (30), wherein said accessory comprises at least one semiconductor and least one electrically insulating element, these elements being intended to surround at least one portion or end of an electrical cable (10a, 10b), and wherein said accessory is surrounded by said electrically insulating crosslinked layer (30), **characterized in that** said electrically insulating crosslinked layer (30) comprises at least one polymer material, boron nitride and silicon carbide.

2. The assembly according to claim 1, **characterized in that** the electrically insulating crosslinked layer (30) comprises from 1 to 30 % by weight of boron nitride relative to the total weight of the crosslinked layer.

3. The assembly according to claim 1 or 2, **characterized in that** the electrically insulating crosslinked layer (30) comprises from 2 to 40 % by weight of silicon carbide, relative to the total weight of the crosslinked layer.

4. The assembly according to any of the preceding claims, **characterized in that** the polymer material is chosen from among polyorganosiloxanes.

5. The assembly according to any of the preceding claims, **characterized in that** the boron nitride is in the form of elongate particles.

6. The assembly according to any of the preceding claims, **characterized in that** the silicon carbide is in the form of spherical particles.

7. The assembly according to any of the preceding claims, **characterized in that** the silicon carbide and boron nitride are in the form of micrometric particles.

8. The assembly according to any of the preceding claims, **characterized in that** the electrically insulating crosslinked layer (30) has thermal conductivity of at least 0.18 W/m.k.

9. The assembly according to any of the preceding claims, **characterized in that** the electrically insulating crosslinked layer (30) is in physical contact with the accessory.

10. The assembly according to any of the preceding claims, **characterized in that** it is a joint for electrical cable.

11. An electrical device comprising:
- at least one electrical cable (10a, 10b), and
- an assembly comprising an accessory surrounding at least one portion or end of said electrical cable (10a, 10b), and an electrically insulating crosslinked layer (30),
**characterized in that** the assembly is such as defined in any of claims 1 to 10.

12. The device according to claim 11, **characterized in that** the accessory is a joint, and the electrical device further comprises a second electrical cable (10a, 10b), the joint surrounding at least one portion or end of each of said electrical cables.

13. Use of an electrically insulating crosslinked layer (30) comprising at least one polymer material, boron nitride and silicon carbide, around an accessory for electrical cable in an assembly such as defined in any of claims 1 to 10, or in an electrical device such as defined in any of claims 11 to 12, to promote the evacuation of heat.

14. A method for manufacturing an assembly such as defined in any of claims 1 to 10, **characterized in that** it comprises at least the following steps:
- a step i) to apply a crosslinkable composition comprising at least one precursor of said polymer material, boron nitride and silicon carbide, around an accessory for electrical cable; and
- a step ii) to crosslink the crosslinkable composition.

15. A method for manufacturing a device such as defined in any of claims 11 to 12, **characterized in that** it comprises at least the following steps:
- a step a) to install an accessory for electrical cable;
- a step i) to apply a crosslinkable composition comprising at least one precursor of said polymer material, boron nitride and silicon carbide, around said accessory for electrical cable, and
- a step ii) to crosslink the crosslinkable composition.

16. The method according to claim 15 **characterized in that**, before step i), it further comprises a step aᵢ) to apply a positioning or protective element of the crosslinked layer around the accessory, the positioning or protective element being configured to allow performing of step i).

17. A kit for joining two electrical cables (10a, 10b) by means of a joint such as defined in claim 10, **characterized in that** it comprises:
- boron nitride,
- silicon carbide, and
- at least one precursor of said polymer material, the aforementioned compounds being intended to form a crosslinkable composition; and
- a positioning or protective element of the crosslinked layer,
said element being configured to allow application of the crosslinkable composition.

18. An assembly comprising an accessory for electrical cable (10a, 10b) and an electrically insulating crosslinked layer (30), wherein said accessory comprises at least one semiconductor element and at least one electrically insulating element, these elements being intended to surround at least one portion or end of an electrical cable (10a, 10b), and wherein said accessory is surrounded by said electrically insulating crosslinked layer (30), **characterized in that** said electrically insulating crosslinked layer (30) comprises at least one polymer material, at least one first filler having thermal conductivity CT₁, in W·m⁻¹·K⁻¹ at 35 °C, and at least one second filler having thermal conductivity CT₂, in W·m⁻¹·K⁻¹ at 35 °C, such that CT₂ ≥ CT₁ + 40 W·m⁻¹·K⁻¹.
